# EUROPÄISCHE PATENTSCHRIFT

(11) **EP 2 445 773 B1**
(45) Veröffentlichungstag und Bekanntmachung des Hinweises auf die Patenterteilung: **06.03.2013**
(21) Anmeldenummer: 10752801.0
(22) Anmeldetag: 10.09.2010
(51) Int. Cl.: B62D 5/04

(54) **LENKVORRICHTUNG, INSBESONDERE ELEKTRISCHE SERVOLENKVORRICHTUNG FÜR EIN KRAFTFAHRZEUG**
STEERING DEVICE, PARTICULARLY ELECTRIC SERVO STEERING DEVICE FOR A MOTOR VEHICLE
DISPOSITIF DE DIRECTION, EN PARTICULIER DISPOSITIF ÉLECTRIQUE DE DIRECTION ASSISTÉE POUR UN VÉHICULE AUTOMOBILE

(30) Priorität: 17.09.2009 DE 102009029538
(43) Veröffentlichungstag der Anmeldung: 02.05.2012
(73) Patentinhaber: ZF Lenksysteme GmbH, 73527 Schwäbisch Gmünd (DE)
(72) Erfinder: KNÖDLER, Helmut, 73547 Lorch (DE); OCHS, Michael, 73566 Bartholomä (DE); KÖHNLE, Hans, 73575 Leinzell (DE)
(86) Internationale Anmeldenummer: PCT/EP2010/063270
(87) Internationale Veröffentlichungsnummer: WO 2011/032885

(56) Entgegenhaltungen:
- DE-A1-102007 038 902

## Beschreibung

Die Erfindung betrifft eine Lenkvorrichtung nach der im Oberbegriff von Anspruch 1 näher definierten Art.

Lenkvorrichtungen dieser Art sind z. B. aus der DE 10 2006 051 799 A1, der EP 0 133 003 B1 und der DE 103 92 534 T5 bekannt.

Als nächstliegender Stand der Technik wird die DE 10 2007 083 902 A1 genannt, welche ein elektrisches Lenkhilfe system beschreibt, die einen achsparallelen Antrieb aufweist, der ein Lenkgetriebegehäuse, eine Lenkachse, ein Lenkelement und mindestens eine mit diesem Lenkelement verbundene Achsanlenkung besitzt. Weiterhin weist die Lenkhilfsvorrichtung eine Steuereinheit und eine Motoreinheit auf, welche achsparallel und an der gleichen Seite zu einem Servogetriebe angeordnet sind.

Lenkvorrichtungen für Kraftfahrzeuge sind häufig mit Hilfskraftunterstützungen versehen, die als Servolenkvorrichtungen bezeichnet werden. Für die Hilfskraftunterstützung werden unter anderem hydraulische Unterstützungen oder eine elektrische Hilfskraftunterstützung verwendet, bei der die Servowirkung mit einem Elektromotor erzeugt wird. Hierzu ist der Elektromotor mit dem Getriebe und der Steuereinheit für den Elektromotor am Gehäuse der Servolenkvorrichtung, im Allgemeinen parallel zur Lenkvorrichtung, angeordnet.

Wenn über die Lenkachse eine rotatorische Lenkbewegung durch den Fahrer eingeleitet wird, so erfolgt durch die rotatorisch bewegte Lenkachse eine translatorische Achsanlenkung. Hierzu dient eine Ritzel-Zahnstangen-Verbindung als Lenkelement. In der Lenkachse sind im Allgemeinen Drehmomentsensoren vorgesehen, die als Signalgeber für die Lenkrichtung und das erforderliche Lenkmoment einer Steuereinheit beziehungsweise einer Steuer-/Regeleinheit für den Elektromotor dienen.

Das Gehäuse des Elektromotors ist zusammen mit der Steuereinheit am Gehäuse der Lenkvorrichtung angeflanscht. Nachteilig bei einem derartigen Lenksystem ist jedoch, dass das Servogetriebe mit dem Elektromotor und der dazugehörigen Steuereinheit relativ zur Lenkung eine große Länge aufweist. Da die gesamte Servoeinheit entweder links oder rechts vom Servogetriebe der Servoeinheit angeordnet ist, kollidiert die Servoeinheit bei einer Anordnung in Richtung Lenkspindel oft mit der mittig angeordneten Abgasanlage oder Ölwanne. Bei einer Anordnung in Richtung Radhaus ist die Servoeinheit verstärkt Spritzwasser und Steinschlag ausgesetzt.

Um nachteilige große Längen zu vermeiden, ist es auch bekannt die Steuereinheit separat an einer gesonderten Stelle anzuordnen und über eine Leitwerksverbindung mit dem Elektromotor und dessen Servogetriebe zu verbinden. Nachteilig dabei sind jedoch die auf dieser Weise außenliegenden elektrischen Leitungen, z. B. mit einer Gefahr von Beschädigungen.

Der vorliegenden Erfindung liegt daher die Aufgabe zugrunde, ein Lenksystem zu schaffen, bei welchem einerseits keine außenliegenden elektrischen Leitungen zwischen Elektromotor und Steuereinheit vorhanden sind, bei der jedoch andererseits keine überaus große Baulänge auftritt.

Erfindungsgemäß wird diese Aufgabe durch die im kennzeichnenden Teil von Anspruch 1 genannten Merkmale gelöst.

Erfindungsgemäß sind nunmehr im Unterschied zum Stand der Technik, bei dem Motoreinheit und dazugehörige Steuereinheit gemeinsam entweder links oder rechts vom Getriebe angeordnet sind, das Steuergerätegehäuse mit der Steuereinheit und das Motorgehäuse mit der Motoreinheit nunmehr auf verschiedenen Seiten des Servogetriebes angeordnet. Durch dies Ausgestaltung lässt sich der vorhandene Bauraum besser ausnutzen und die Gesamtlänge der Lenkvorrichtung wird nicht in nachteiliger Weise durch die Servoeinheit verlängert.

In einer vorteilhaften Weise können das Steuergerätegehäuse und das Motorgehäuse jeweils mit einem Flansch versehen sein, wobei sich das Servogetriebe zwischen den beiden Flanschen befindet. Eine Verbindung zwischen den beiden Flanschen kann derart erfolgen, dass das Steuergerätegehäuse und das Motorgehäuse radial außerhalb des dazwischen liegenden Servogetriebes miteinander verbunden sind.

Vorteilhafte Ausgestaltungen und Weiterbildungen der Erfindung ergeben sich aus den übrigen Unteransprüchen.

Nachfolgend sind Ausführungsbeispiele der Erfindung anhand der Zeichnung prinzipmäßig beschrieben.

Es zeigt:
Figur 1: Eine Lenkvorrichtung mit einer elektrischen Servolenkvorrichtung, insbesondere für Kraftfahrzeuge.
Figur 2: Einen Längsschnitt - ausschnittsweise - durch die Lenkvorrichtung entlang der Zahnstange im Bereich der elektrischen Servolenkvorrichtung bzw. Servoeinheit.
Figur 3: Einen Längsschnitt, ähnlich dem Längsschnitt nach der Figur 2 mit einer getauschten Anordnung von Elektromotor und Steuereinheit. -

Ein elektromechanisches Lenksystem mit einer Lenkvorrichtung mit einem achsparallelen Antrieb und einem Elektromotor, der eine lenkunterstützende Kraft über ein Getriebe, z. B. auf eine Kugelmutter-Spindel-Getriebe überträgt, ist aus dem Stand der Technik bekannt, weshalb nachfolgend nur auf die für die Erfindung wesentlichen Merkmale näher eingegangen wird. Zum Stand der Technik wird z. B. auf die eingangs genannten Schriften verwiesen.

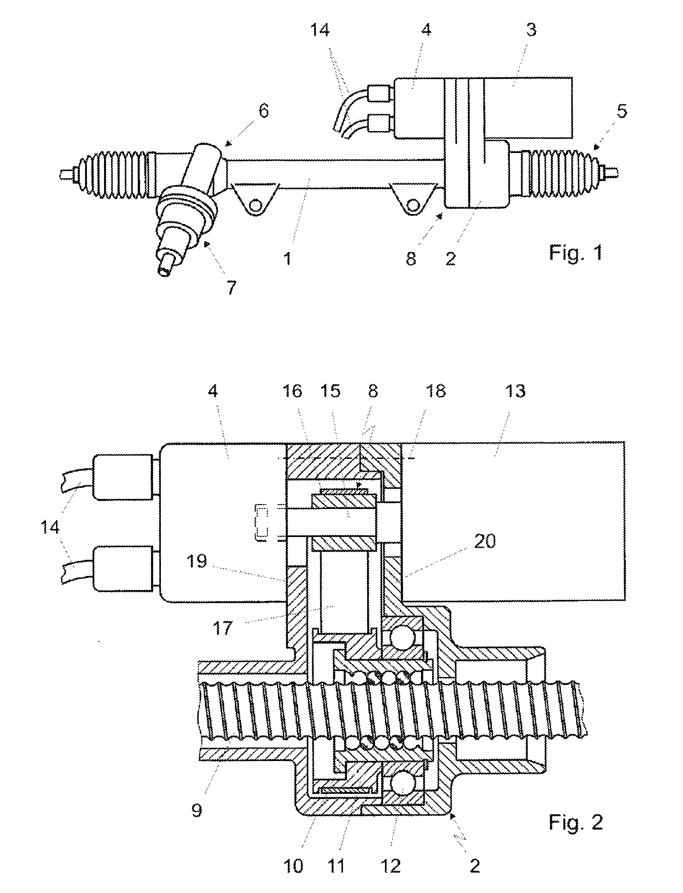

Die Figur 1 zeigt eine Lenkvorrichtung, mit einem Lenkgetriebegehäuse 1, einem Getriebedeckel 2, einem Elektromotor 3, einer Steuer-/Regeleinheit 4, einer Zahnstange 5 zum Auslenken von nicht dargestellten Fahrzeugrädern, einem Ritzel 6 mit einem Drehmomentsensor 7 sowie ein Servogetriebe 8 in dem Getriebedeckel 2, beispielsweise einem Zugmittelgetriebe.

Wie aus der Figur 2 ersichtlich ist, kämmt die Zahnstange 5 an einem nicht gezeigten Verzahnungsabschnitt mit dem nicht näher dargestellten Ritzel 6 einer Lenkwelle. Die Zahnstange 5 weist ein Außengewinde an einem Spindelabschnitt 9 auf, das im Eingriff mit einer Kugelumlaufmutter 10 steht.

Die axial unbeweglich gelagerte Kugelumlaufmutter 10 und die Zahnstange 5 bilden eine Bewegungsschraube. Die Kugelumlaufmutter 10 ist drehfest mit einer Riemenscheibe 11 des Servogetriebes 8 verbunden und über ein Radiallager 12 in einem als Getriebegehäuseteil 2 gebildeten Teil des Lenkgetriebegehäuses 1 gelagert. Parallel zu der Zahnstange 5 sind der Elektromotor 13 und die Steuer-/Regeleinheit 4 angeordnet. Auf einer Antriebswelle 15 des Elektromotors 13 ist eine zweite, im Durchmesser kleinere Riemenscheibe 16, angeordnet. Ein als Riemen 17 dienendes Zugmittel ist über die beiden Riemenscheiben 11 und 16 gespannt und bildet zusammen mit diesem das Servogetriebe 8 in Form eines Zugmittelgetriebes.

Wie ersichtlich sind der Elektromotor 13 als Motoreinheit mit ihrem Motorgehäuse und die Steuereinheit 4 mit ihrem Steuergerätegehäuse, in dessen Innerem die Steuereinheit 4 angeordnet ist, auf verschiedenen Seiten des Servogetriebes 8 angeordnet. Durch die Trennung des Elektromotores 13 von der Steuereinheit 4 in dieser Anordnung möglichst nahe an dem Riemen 17, jedoch auf verschiedenen Seiten, entsteht eine kompakte Einheit, die in etwa symmetrisch zum Kugelumlaufgetriebe angeordnet ist und die so den vorhandenen Bauraum zwischen Abgasanlage beziehungsweise Ölwanne und Radhaus optimal nutzt.

Die Verbindung zwischen dem Gehäuse des Elektromotors 13 und dem Steuergerätegehäuse der Steuereinheit 4 erfolgt radial außerhalb des Servogetriebes 8 durch jeweils einen Flansch 19 am Steuergerätegehäuse und einen Flansch 20 am Motorgehäuse. Auf diese Weise ist eine kompakte, nach außen geschlossene Einheit geschaffen ohne frei liegende elektrische Steuer- und Stromleitungen. Steuergerät 4 und Elektromotor 13 können durch im Inneren der beiden Gehäuse angeordnete und durch das Servogetriebe 8 geführte Leitungen miteinander verbunden werden (nicht extra dargestellt).

Wie aus der Figur 2 ersichtlich ist, erfolgt die Zuführung von Steuer- und Stromleitungen 14 in das Steuergerätegehäuse, von wo aus sie weitergeführt werden.

Die Verbindung der beiden Flansche 19 und 20 kann auf beliebige, hier nicht näher dargestellte Weise, z. B. durch eine Schraubverbindung mit entsprechend über den Umfang verteilt angeordneten Schrauben erfolgen, wie dies mit dem Bezugszeichen "18" angedeutet ist.

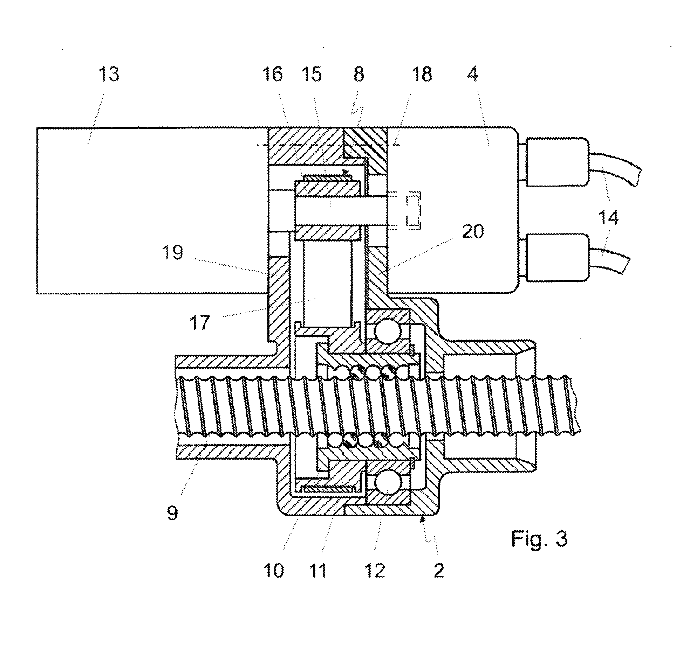

Das in der Figur 3 dargestellte Ausführungsbeispiel ist im Wesentlichen von gleichem Aufbau, wie das in der Figur 2 dargestellte, weshalb auch die gleichen Bezugszeichen verwendet worden sind. Unterschiedlich ist lediglich die Anordnung von Elektromotor 13 und Steuereinheit 4, deren Lagen jeweils im Vergleich zu Figur 2 vertauscht sind. Je nach verfügbarem Einbauraum lässt sich auf diese Weise die jeweils günstigste Lenkungsvariante herstellen.

### Bezugszeichenliste

- 1: Lenkgetriebegehäuse
- 2: Getriebedeckel
- 3: Elektromotor
- 4: Steuer-/Regeleinheit
- 5: Zahnstange
- 6: Ritzel
- 7: Drehmomentsensor
- 8: Servogetriebe
- 9: Spindelabschnitt
- 10: Kugelumlaufmutter
- 11: Riemenscheibe
- 12: Radiallager
- 13: Elektromotor
- 14: Steuer- und Stromleitungen
- 15: Antriebswelle
- 16: Riemenscheibe
- 17: Riemen
- 18: Schraubverbindung
- 19: Flansch
- 20: Flansch

## Patentansprüche

1. Lenkvorrichtung, insbesondere elektrische Servolenkvorrichtung für ein Kraftfahrzeug, mit einem achsparallelen Antrieb, welcher ein Lenkgetriebegehäuse (1), eine Lenkachse, ein Lenkelement und zumindest eine mit dem Lenkelement verbundene Achsanlenkung aufweist, mit einer am Lenkgetriebegehäuse (1) angeordneten Motoreinheit (13), mit einem in einem Getriebedeckel (2) angeordneten Servogetriebe (8) und mit einer in einem Steuergerätegehäuse angeordneten Steuereinheit (4) für die Motoreinheit (13), **dadurch gekennzeichnet, dass** das Steuergerätegehäuse der Steuereinheit (4) auf einer achsparallelen Seite des Servogetriebes (8) und ein Motorgehäuse der Motoreinheit (13) auf der anderen achsparallelen Seite des Servogetriebes (8) angeordnet ist.

2. Lenkvorrichtung nach Anspruch 1, **dadurch gekennzeichnet, dass** das Steuergerätegehäuse und das Motorgehäuse jeweils mit einem Flansch (19,20) versehen sind, wobei das Servogetriebe (8) sich zwischen den beiden Flanschen befindet.

3. Lenkvorrichtung nach Anspruch 1 oder 2, **dadurch gekennzeichnet, dass** das Steuergerätegehäuse und das Motorgehäuse radial außerhalb des Servogetriebes (8) miteinander verbunden sind.

4. Lenkvorrichtung nach Anspruch 3, **dadurch gekennzeichnet, dass** das Steuergerätegehäuse und das Motorgehäuse über die beiden Flansche (19,20) miteinander verbunden sind.

5. Lenkvorrichtung nach Anspruch 3 oder 4, **dadurch gekennzeichnet, dass** das Steuergerätegehäuse und das Motorgehäuse über eine Schraubverbindung (18) miteinander verbunden sind.

6. Lenkvorrichtung nach einem der Ansprüche 1 bis 5, **dadurch gekennzeichnet, dass** das Servogetriebe (8) ein Zugmittelgetriebe mit einem Riemen (17) und mit Riemenscheiben (16) aufweist.

7. Lenkvorrichtung nach einem der Ansprüche 1 bis 6, **dadurch gekennzeichnet, dass** die Motoreinheit (13) einen Elektromotor aufweist, der über ein Kugelumlaufgetriebe mit einem Spindelabschnitt (9) einer Zahnstange (5) als Lenkelement verbunden ist.

## Claims

1. Steering device, in particular electric servo steering device for a motor vehicle, having an axially parallel drive which has a steering mechanism housing (1), a steering pivot, a steering element and at least one axle articulation connected to the steering element, having a motor unit (13) which is arranged on the steering mechanism housing (1), having a servo mechanism (8) arranged in a mechanism cover (2), and having a control unit (4), which is arranged in a control unit housing, for the motor unit (13), **characterized in that** the control unit housing of the control unit (4) is arranged on one axially parallel side of the servo mechanism (8) and a motor housing of the motor unit (13) is arranged on the other axially parallel side of the servo mechanism (8).

2. Steering device according to Claim 1, **characterized in that** the control unit housing and the motor housing are provided in each case with a flange (19, 20), wherein the servo mechanism (8) is situated between the two flanges.

3. Steering device according to Claim 1 or 2, **characterized in that** the control unit housing and the motor housing are connected to one another radially outside the servo mechanism (8).

4. Steering device according to Claim 3, **characterized in that** the control unit housing and the motor housing are connected to one another via the two flanges (19, 20).

5. Steering device according to Claim 3 or 4, **characterized in that** the control unit housing and the motor housing are connected to one another via a screw connection (18).

6. Steering device according to one of Claims 1 to 5, **characterized in that** the servo mechanism (8) has a traction mechanism drive with a belt (17) and with belt pulleys (16).

7. Steering device according to one of Claims 1 to 6, **characterized in that** the motor unit (13) has an electric motor which is connected via a recirculating ball mechanism to a spindle portion (9) of a toothed rack (5) as a steering element.

## Revendications

1. Dispositif de direction, en particulier dispositif électrique de direction assistée pour un véhicule automobile, comprenant un entraînement parallèle à l'axe qui comprend un boîtier de mécanisme de direction (1), un essieu directeur, un élément de direction et au moins une articulation d'essieu reliée à l'élément de direction, comprenant une unité de moteur (13) disposée sur le boîtier de mécanisme de direction (1), comprenant un mécanisme de direction assistée (8) disposé dans un couvercle de transmission (2) et comprenant une unité de commande (4), disposée dans un boîtier de module de commande, pour l'unité de moteur (13), **caractérisé en ce que** le boîtier de module de commande de l'unité de commande (4) est disposé d'un côté parallèle à l'axe du mécanisme de direction assistée (8) et un carter de moteur de l'unité de moteur (13) est disposé de l'autre côté parallèle à l'axe du mécanisme de direction assistée (8).

2. Dispositif de direction selon la revendication 1, **caractérisé en ce que** le boîtier de module de commande et le carter de moteur sont pourvus respectivement d'une bride (19, 20), le mécanisme de direction assistée (8) se trouvant entre les deux brides.

3. Dispositif de direction selon la revendication 1 ou 2, **caractérisé en ce que** le boîtier de module de commande et le carter de moteur sont reliés l'un à l'autre radialement à l'extérieur du mécanisme de direction assistée (8).

4. Dispositif de direction selon la revendication 3, **caractérisé en ce que** le boîtier de module de commande et le carter de moteur sont reliés l'un à l'autre au moyen des deux brides (19, 20).

5. Dispositif de direction selon la revendication 3 ou 4, **caractérisé en ce que** le boîtier de module de commande et le carter de moteur sont reliés l'un à l'autre au moyen d'une liaison vissée (18).

6. Dispositif de direction selon l'une quelconque des revendications 1 à 5, **caractérisé en ce que** le mécanisme de direction assistée (8) comprend une transmission à moyen de traction dotée d'une courroie (17) et d'une poulie pour courroie (16).

7. Dispositif de direction selon l'une quelconque des revendications 1 à 6, **caractérisé en ce que** l'unité de moteur (13) comprend un moteur électrique qui est relié, au moyen d'une transmission à recirculation de billes, à une section de broche (9) d'une crémaillère (5) faisant office d'élément de direction.
